# EUROPEAN PATENT APPLICATION

(11) **EP 1 970 113 A1**
(43) Date of publication of application: **17.09.2008**
(21) Application number: 07121887.9
(22) Date of filing: 29.11.2007
(51) Int. Cl.: B01D 35/30, B01D 35/153

(54) **Water purifying device**

(30) Priority: 13.03.2007 KR 20070024727
(71) Applicant: Samsung Electronics Co., Ltd., Suwon-si, Gyeonggi-Do (KR)
(72) Inventor: An, Jae Koog, Seo-gu, Gwangju (KR)
(74) Representative: Grünecker, Kinkeldey, Stockmair & Schwanhäusser Anwaltssozietät

(57) **Abstract**

A water purifying device includes a filter unit (10) that can be easily coupled and separated. The water purifying device includes a filter unit (10) to filter out impurities from water passing therethrough and a connection unit (20) connected to the filter unit (10) to transmit water from the outside to the filter unit and to transmit the water purified by the filter unit to the outside. The connection unit (20) includes an external case (21) having an introduction port (21a) through which water is introduced from the outside and a discharge port (21b) through which purified water is discharged to the outside, an internal case (22) rotatably mounted in the external case (21), the internal case (22) having a first communication hole (22a) selectively communicating with the introduction port (21a) and a second communication hole (22b) selectively communicating with the discharge port (21b), and an opening and closing valve (24) to selectively open and close the first communication hole (21a) depending upon whether the filter unit (10) is coupled or not to the connection unit (20). The first communication hole is opened and closed by the opening and closing valve (24). As a result, it is possible to omit a sealing member to sealing a region adjacent to the first communication hole, whereby the rotation of the filter unit (10) is more easily accomplished. Consequently, the process for coupling the filter unit (10) to the connection unit (20) or separating the filter unit from the connection unit (20) may be more conveniently accomplished.

## Description

### CROSS-REFERENCE TO RELATED APPLICATIONS

This application claims the benefit of Korean Patent Application No. 2007-24727, filed on March 13, 2007 in the Korean Intellectual Property Office, the disclosure of which is incorporated herein by reference.

### BACKGROUND

### 1. Field

One or more embodiments of the present invention relate to a water purifying device, and, more particularly, to a water purifying device including a filter unit that may be easily replaced.

### 2. Description of the Related Art

Generally, a water purifying device is a device that removes foreign matter from water supplied thereinto. A water purifying device is normally included in a water purifier. An example of water purifying device is disclosed in Korean Patent Registration No. 10-361671. The disclosed water purifying device is mounted in a refrigerator to purify water to be used as drinking water or to make ice.

Generally, a water purifying device includes a filter unit having a filter mounted therein and a connection unit to which the filter unit is coupled such that the filter unit is connected with an external flow channel.

The filter unit includes a connection part mounted in the connection unit such that the filter unit is coupled to the connection unit via the connection part. The connection part is provided at the outer circumference thereof with an inlet port through which water is introduced and an outlet port through which water is discharged.

Also, the connection unit includes an external case having an introduction port formed at the outer circumference thereof to allow water to be introduced from the outside therethrough and a discharge port formed at the outer circumference thereof to allow water to be discharged to the outside therethrough, and an internal case rotatably mounted in the external case. In the internal case is mounted the connection part of the filter unit such that the internal case rotates together with the filter unit. The introduction port and the discharge port selectively communicate with the inlet port and the outlet port, respectively, depending upon the rotation angle of the internal case. The internal case is provided at the outer circumference thereof with a first communication hole to allow the introduction port to selectively communicate with the inlet port and a second communication hole to allow the discharge port to selectively communicate with the outlet port. Also, the internal case is provided at the outer circumference thereof with a pair of sealing members which are formed in an annular shape. One of the sealing members is disposed around the first communication hole, and the other sealing member is disposed around the second communication hole. Consequently, a space defined between the inner surface of the external case and the outer surface of the internal case is partitioned from the first communication hole and the second communication hole.

In the conventional water purifying device, however, friction occurs between the sealing member disposed at the outer circumference of the internal case and the inner surface of the external case when the filter unit is rotated such that the filter unit is coupled to or separated from the connection unit. As a result, it is necessary to apply a large force to the filter unit so as to rotate the filter unit, whereby the coupling or separation of the filter unit is difficult.

### SUMMARY

One or more embodiments of the present invention provide a water purifying device having a reduced number of sealing members, thereby more easily accomplishing the coupling or separation of a filter unit to or from a connection unit.

Additional aspects and/or advantages will be set forth in part in the description which follows and, in part, will be apparent from the description, or may be learned by practice of the invention.

[0010] To achieve at least the above and/or other aspects and advantages, embodiments of the present invention include a filter unit to filter out impurities from water passing therethrough and a connection unit connected to the filter unit to transmit water from the outside to the filter unit and to transmit the water purified by the filter unit to the outside, wherein the connection unit includes an external case having an introduction port through which water is introduced from the outside and a discharge port through which purified water is discharged to the outside, an internal case rotatably mounted in the external case, the internal case having a first communication hole selectively communicating with the introduction port and a second communication hole selectively communicating with the discharge port, and an opening and closing valve to selectively open and close the first communication hole depending upon whether the filter unit is coupled or not coupled to the connection unit.

In an embodiment, the introduction port is formed on the central axis of the external case, and the discharge port is formed eccentrically with respect to the introduction port. Also, the first communication hole is formed on the central axis of the internal case such that the first communication hole corresponds to the introduction port, and the second communication hole is formed eccentrically with respect to the first communication hole such that the second communication hole corresponds to the discharge port, whereby the second communication hole and the discharge port selectively communicate with each other depending upon the rotation angle of the internal case.

In an embodiment, the opening and closing valve includes a valve part elastically supported in the first communication hole by an elastic member to open and close the first communication hole, an elastically supporting part having a diameter less than that of the valve part such that the elastic member is mounted on the elastically supporting part, and a compression part extending through the first communication hole such that the compression part protrudes into the internal case, the compression part being compressed by the filter unit fitted in the internal case.

In an embodiment, the valve part is provided at the outer circumference thereof with a valve sealing member, which is formed in an annular shape to accomplish the stable closing of the first communication hole.

In an embodiment, the connection unit further includes a seat disposed in the first communication hole, the seat having a gradually decreasing diameter such that the seat is opened and closed by the valve part.

In an embodiment, the compression part is formed in the section shape of a cross such that water passes through the compression part.

[0016]In an embodiment, the external case includes an external installation part formed in the shape of a cylinder opened at opposite sides thereof and an external cover formed in the shape of a hemisphere to close one side of the external installation part, the internal case includes an internal installation part formed in the shape of a cylinder opened at opposite sides thereof and mounted in the external installation part and an internal cover formed in the shape of a hemisphere to close one side of the internal installation part, the internal cover being disposed inside the external cover, and the connection unit further includes a first sealing member disposed between the external installation part and the internal installation part to prevent the leakage of water through a gap defined between the external installation part and the internal installation part, the first sealing member being formed in an annular shape.

In an embodiment, the filter unit includes a connection part disposed at the top thereof such that the connection part is mounted in the internal case, the connection part having an inlet port and outlet ports, and the connection unit further includes a second sealing member disposed between the inner surface of the internal case and the outer surface of the connection part to prevent the leakage of water through a gap defined between the inner surface of the internal case and the outer surface of the connection part.

In an embodiment, the filter unit further includes a first connection pipe which protrudes from the connection part and in which the inlet port is formed, and the internal case is provided with a second connection pipe which extends inward such that the first connection pipe is fitted in the second connection pipe. Also, the connection unit further includes a third sealing member disposed between the outer surface of the first connection pipe and the inner surface of the second connection pipe to prevent the leakage of water through a gap defined between the outer surface of the first connection pipe and the inner surface of the second connection pipe.

In an embodiment, the connection unit further includes a fourth sealing member formed around the second communication hole of the internal case in an annular shape to partition a space defined between the inner surface of the external case and the outer surface of the internal case from the second communication hole.

In an embodiment, the connection unit further includes a connection member formed in the shape of a cylinder opened at opposite sides thereof such that the external case and the internal case are coupled to one side of the connection member, and the filter unit is detachably coupled to the other side of the connection member.

In an embodiment, the connection member is provided at the inner circumference thereof with a plurality of first catching jaws to catch the external case, the first catching jaws being spaced apart from each other in the circumferential direction, and the external case is provided at the outer circumference thereof with a plurality of first protrusions which are caught by the first catching jaws after the first protrusions are inserted through spaces defined between the first catching jaws, the first protrusions being spaced apart from each other in the circumferential direction.

In an embodiment, the connection member is provided at the inner circumference thereof with a plurality of second catching jaws to catch the filter unit, the first catching jaws being spaced apart from each other in the circumferential direction, and the filter unit is provided at the outer circumference thereof with a plurality of second protrusions which are caught by the second catching jaws after the second protrusions are inserted through spaces defined between the second catching jaws, the second protrusions being spaced apart from each other in the circumferential direction.

To achieve at least the above and/or other aspects and advantages, embodiments of the present invention include a water purifying device including a filter unit to filter out impurities from water passing therethrough and a connection unit connected to the filter unit to transmit water from the outside to the filter unit and to transmit the water purified by the filter unit to the outside, wherein the connection unit includes an external case having an introduction port disposed on the central axis thereof to allow water to be introduced from the outside therethrough and a discharge port disposed eccentrically with respect to the introduction port to allow water to be discharged to the outside, an internal case rotatably mounted in the external case, the internal case having a first communication hole disposed on the central axis thereof to selectively communicate with the introduction port and a second communication hole disposed eccentrically with respect to the first communication hole to selectively communicate with the discharge port depending upon the rotation angle thereof, and an opening and closing valve to selectively open and close the first communication hole depending upon whether the filter unit is coupled or not coupled to the connection unit.

### BRIEF DESCRIPTION OF THE DRAWINGS

These and/or other aspects and advantages will become apparent and more readily appreciated from the following description of embodiments, taken in conjunction with the accompanying drawings of which:
FIG. 1 is an exploded perspective view illustrating a water purifying device, according to an embodiment of the present invention;
FIG. 2 is a sectional view of the water purifying device, according to an embodiment of the present invention, illustrating the coupling between a filter unit and a connection unit;
FIG. 3 is an enlarged view of part III of FIG. 2;
FIG. 4 is a sectional view of the water purifying device, according to an embodiment of the present invention, illustrating the separation between the filter unit and the connection unit; and
FIG. 5 is an enlarged view of part IV of FIG. 4.

### DETAILED DESCRIPTION OF EMBODIMENTS

Reference will now be made in detail to embodiments of the present invention, examples of which are illustrated in the accompanying drawings, wherein like reference numerals refer to like elements throughout. Embodiments are described below to explain the present invention by referring to the figures.

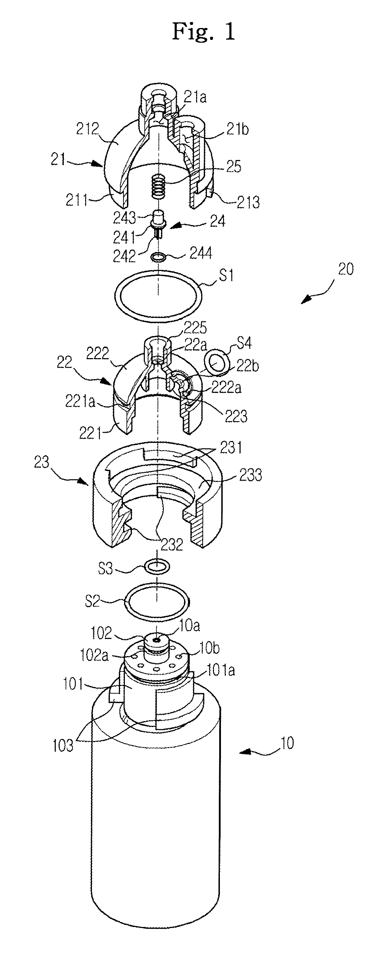

Referring to FIG. 1, a water purifying device according to one or more embodiments of the present invention may include, for example, a filter unit 10 to filter out impurities from water passing therethrough and a connection unit 20 to transmit water from the outside to the filter unit 10 and to transmit the water purified by the filter unit 10 to the outside.

The filter unit 10 may be constructed in a cylindrical structure in which a filter is disposed in the filter unit 10 such that water is purified by the filter as the water passes through the filter. The filter unit 10 may be provided at the top thereof with a connection part 101, which may be fitted in the connection unit 20 in such a manner that the connection part 101 is connected to the connection unit 20. In the center of the top of the connection part 101 an inlet port 10a may be formed through which water is transmitted from the outside, i.e., unfiltered water. Around the inlet port 10a may be formed outlet ports 10b through which the water purified by the filter unit 10 is discharged. In an embodiment, the connection part 101 may include, for example, a first connection pipe 102 that protrudes upward and in which the inlet port 10a may be formed. The outlet ports 10b may be formed in the top of the connection part 101 adjacent to the first connection pipe 102.

The connection unit 20 may include, for example, an external case 21 having an introduction port 21 a through which water is introduced from the outside and a discharge port 21b through which purified water is discharged to the outside, an internal case 22 rotatably mounted in the external case 21 such that the internal case 22 may rotate together with the filter unit when a force is applied from the filter unit 10 to the internal case 22, the internal case 22 being constructed such that the outlet ports 10b of the filter unit 10 may selectively communicate with the discharge port 21b of the external case 21 via the internal case 22 depending upon the rotation angle of the internal case 22 with respect to the external case 21, and a connection member 23 to allow the internal case 22 to be rotatably mounted in the external case and to maintain the filter unit 10 mounted in the internal case 22. Here, the internal case 22 may have a first communication hole 22a through which the introduction port 21a and the inlet port 10a may selectively communicate with each other and a second communication hole 22b through which the outlet ports 10b may selectively communicate with the discharge port 21 b, depending upon the rotation angle of the internal case 22.

The external case 21 may include an external installation part 211 formed in the shape of a cylinder opened at opposite sides thereof and coupled to the connection member 23 and an external cover 212 formed in the shape of a hemisphere to close one side of the external installation part 211. The introduction port 21 a and the discharge port 21 b may be formed in the external cover 212. The introduction port 21 a may be disposed on the central axis of the external installation part 211, and the discharge port 21 b may be disposed eccentrically with respect to the introduction port 21 a.

The internal case 22 may include an internal installation part 221 formed in the shape of a cylinder opened at opposite sides thereof and mounted inside the external installation part 211 and an internal cover 222 formed in the shape of a hemisphere to close one side of the internal installation part 221, the internal cover 222 being rotatably mounted in the external cover 212. The first communication hole 22a and the second communication hole 22b may be formed in the internal cover 222. The first communication hole 22a may be disposed on the central axis of the internal installation part 221 such that the first communication hole 22a may be formed in a position corresponding to the introduction port 21 a. The second communication hole 22b may be formed eccentrically with respect to the first communication hole 22a such that the second communication hole 22b may be disposed at a position corresponding to the discharge port 21b, depending upon the rotation angle of the internal case 22. Here, the internal case 22 may include a second connection pipe 223, which may extend inward from a position adjacent to the first communication hole 22a such that the first connection pipe 102 may be fitted in the second connection pipe 223. Consequently, the introduction port 21 a and the first communication hole 22a may be maintained disposed at positions corresponding to each other irrespective of the rotation angle of the internal case 22, and the discharge port 21b and the second communication hole 22b may be selectively disposed at positions corresponding to each other depending upon the rotation angle of the internal case 22, whereby the outlet ports 10b may selectively communicate with the discharge port 21 b depending upon the rotation angle of the internal case 22.

Between the external installation part 211 of the external case 21 and the internal installation part 221 of the internal case 22 may be mounted a first sealing member S1 to prevent the leakage of water through a gap defined between the external installation part 211 and the internal installation part 221. Between the connection part 101 of the filter unit 10 and the internal installation part 221 of the internal case 22 may be mounted a second sealing member S2 to prevent the leakage of water through a gap defined between the connection part 101 and the internal installation part 221. Between the outer surface of the first connection pipe 102 and the inner surface of the second connection pipe 223 may be mounted a third sealing member S3 to prevent the leakage of water through a gap defined between the outer surface of the first connection pipe 102 and the inner surface of the second connection pipe 223. At the outer surface of the internal cover 222 of the internal case 22 may be mounted a fourth sealing member S4 which may be formed around the second communication hole 22b in an annular shape to partition a space defined between the external case 21 and the internal case 22 from the second communication hole 22b to prevent water introduced into the gap between the external case 21 and the internal case 22 from leaking through the second communication hole 22b and to allow water discharged from the outlet ports 10b to be discharged through only the discharge port 21 b.

A first sealing installation groove 221 a, in which the first sealing member S1 is mounted, may be formed concavely at the outer circumference of the inner installation part 221 of the internal case 22, e.g., in an annular shape. A second sealing installation groove 101a, in which the second sealing member S2 is mounted, may be formed concavely at the outer circumference of the connection part 101 of the filter unit 10, e.g., in an annular shape. A third sealing installation groove 102a, in which the third sealing member S3 is mounted, may be formed concavely at the outer circumference of the second connection pipe 223 of the filter unit 10, e.g., in an annular shape. A fourth sealing installation groove 222a, in which the fourth sealing member S4 is mounted, may be formed concavely at the outer surface of the internal cover 222 of the internal case 22 adjacent to the second communication hole 22b, e.g., in an annular shape.

The connection member 23 may be formed in the shape of a cylinder opened at opposite sides thereof. The external case 21 and the internal case 22 may be coupled to one side of the connection member 23, and the filter unit 10 may be coupled to the other side of the connection member, whereby the filter unit 10 is coupled to the connection part 20. At one side of the inner circumference of the connection member 23 may be formed first catching jaws 231 which protrude inward to catch the external case 21. At the other side of the inner circumference of the connection member 23 may be formed second catching jaws 232 which protrude inward to catch the filter unit 10. At the center of the inner circumference of the connection member 23 may be formed a support 233 which protrudes inward, e.g., in an annular shape to support the lower ends of the external case 21 and the internal case 22. The support 233 may be constructed such that the internal case 22 rotates in the external case 21.

Here, the external case 21 may be provided with first protrusions 213 that protrude outward from the outer circumference of the external installation part 211 such that the first protrusions 213 may be caught by the first catching jaws 231. The filter unit 10 may be provided with second protrusions 103 that protrude outward from the outer circumference of the connection part 101 such that the second protrusions 103 may be caught by the second catching jaws 232. Consequently, the first protrusions 213 formed at the external installation part 211 may be caught by the first catching jaws 211 of the connection member 23 while the internal case is rotatably mounted in the external case 21, whereby the external case 21 and the internal case 22 are coupled to one side of the connection member 23. Also, the second protrusions 103 formed at the connection part 101 of the filter unit 10 may be caught by the second catching jaws 232 of the connection member 23 while the internal case is rotatably mounted in the external case 21, whereby the filter unit 10 is coupled to the other side of the connection member 23. As a result, the filter unit 10 may be coupled to the connection unit 20.

The first catching jaws 231 may be formed at one side of the inner circumference of the connection member 23 such that the first catching jaws 231 are spaced apart from each other in the circumferential direction. The first protrusions 213 may be formed at the outer circumference of the external installation part 211 of the external case 21 such that the first protrusions 213 are spaced apart from each other in the circumferential direction. Consequently, when the first protrusions 213 are inserted through the spaces between the first catching jaws 231 and the external case 21 is rotated with respect to the connection member 23, the first protrusions 213 may be caught by the first catching jaws 231, whereby the external case 21 is coupled to the connection member 23. Also, the second catching jaws 232 may be formed at the other side of the inner circumference of the connection member 23 such that the second catching jaws 232 are spaced apart from each other in the circumferential direction. The second protrusions 103 may be formed at the outer surface of the connection part 101 of the filter unit 10 such that the second protrusions 103 are spaced apart from each other in the circumferential direction. Consequently, when the second protrusions 103 are inserted through the spaces between the second catching jaws 232 and the filter unit 10 is rotated with respect to the connection member 23, the second protrusions 103 may be caught by the second catching jaws 232, whereby the filter unit 10 may be coupled to the connection member 23 via the connection part 101. During the relative rotation between the filter unit 10 and the connection member 23, the rotating force of the filter unit may be transmitted to the internal case 22 due to the frictional force acting between the second and third sealing members S2 and S3 of the filter unit 10 and the inner surface of the internal case 22. Consequently, the internal case 22 may rotate together with the filter unit 10.

The water purifying device according to the present invention may further include an opening and closing valve 24 mounted in the first communication hole 22a, such that the opening and closing valve 24 may be moved forward and rearward in the first communication hole 22a, to open the first communication hole 22a when the filter unit 10 is coupled to the connection unit 20. Consequently, the first communication hole 22a of the internal case 22 may be open only while the filter unit 10 is coupled to the connection unit 20. The opening and closing valve 24 may be moved forward and rearward in the first communication hole 22a by an elastic member 25, such as a coil spring. The opening and closing valve 24 may include a valve part 241 to open and close the first communication hole 22a, a compression part 242 extending downward from the valve part 241 such that the compression part 242 protrudes into the second connection pipe 223, the compression part 242 being compressed by the first connection pipe 102 of the filter unit 10, which is fitted in the second connection pipe 223, to move the opening and closing valve 24 upward, and an elastically supporting part 243 extending upward from the valve part 241, while having a diameter less than that of the valve part 241, such that the opening and closing valve 24 may be elastically supported by the elastic member 25. The compression part 242 of the opening and closing valve 24 may be formed in the section shape of a cross such that water passes through the compression part 242 while the force from the first connection pipe 102 is transmitted to the compression part 242. In the first communication hole 22a a seat 224 may be disposed. The seat 224 may be tilted such that the seat 224 has a gradually decreasing diameter, the seat 224 being opened and closed by the valve part 241. At the outer circumference of the valve part 241 may be formed a valve sealing member 244, e.g., in an annular shape. The valve sealing member 244 may be in tight contact with the seat 224, while the first communication hole 22a may be closed by the opening and closing valve 24 to accomplish the stable closing of the first communication hole 22a. At the internal case 22 adjacent to the introduction port 21a may be formed a valve installation part 225, e.g., in an annular shape. The valve installation part 225 may extend upward such that the opening and closing valve 24 and the elastic member 25 are mounted in the valve installation part 225.

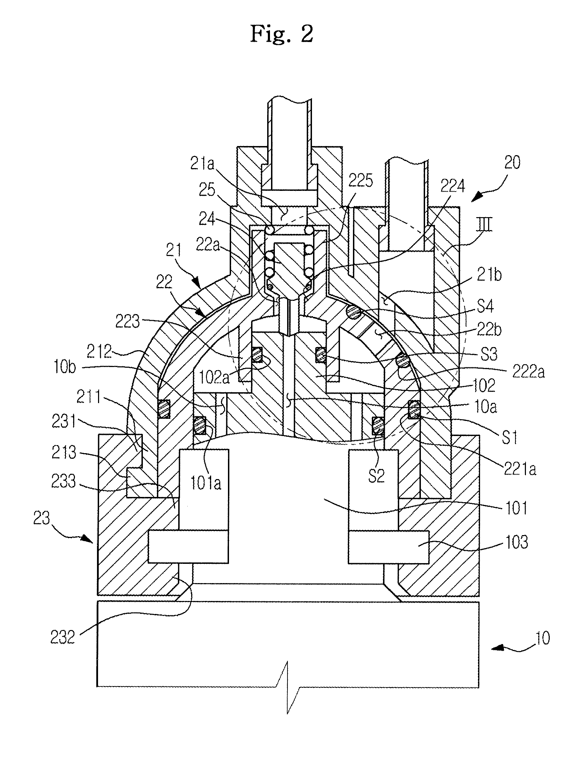

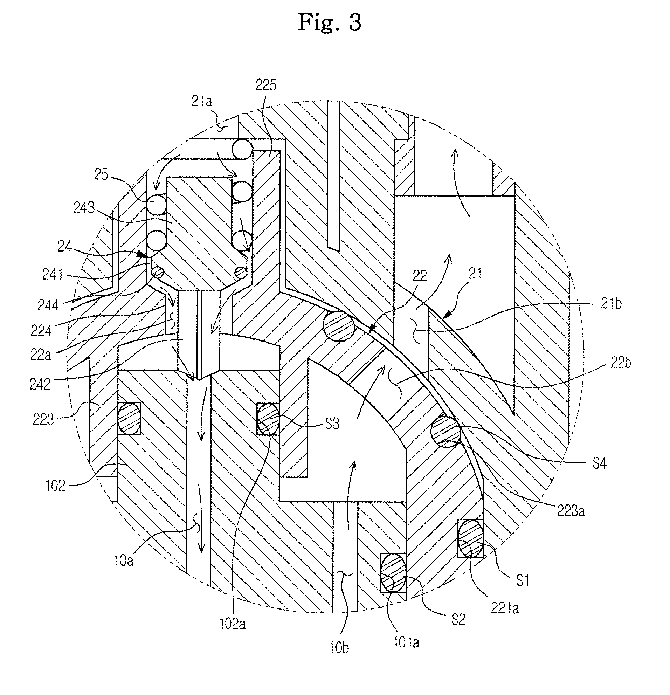

Consequently, when the filter unit 10 is rotated in one direction such that the filter unit 10 is coupled to the connection unit 20, as shown in FIGS. 2 and 3, the opening and closing valve 24 may be compressed by the first connection pipe 102 of the filter unit 10, whereby the opening and closing valve 24 may be moved upward. As a result, the first communication hole 22a is opened, and therefore, the introduction port 21a and the inlet port 10a may communicate with each other via the first communication hole 22a. Consequently, water transmitted from the outside through the introduction port 21 a may be supplied to the inlet port 10a of the filter unit 10. At the same time, the internal case 22 may rotate together with the filter unit 10 in one direction, whereby the second communication hole 22b is moved to a position corresponding to the discharge port 21 b. As a result, the outlet ports 10b may communicate with the discharge port 21 b via the second communication hole 22b. Consequently, water purified by the filter unit 10 may be transmitted from the outlet ports 10b to the discharge port 21b. At this time, the fourth annular sealing member S4, which is disposed adjacent to the second communication hole 22b, may be brought into tight contact with the outside of the discharge port 21 b in the internal case 22. Consequently, water discharged through the outlet ports 10b may be transmitted to the discharge port 21 b; however, water introduced into the gap between the external case 21 and the internal case 22 is typically not transmitted to the discharge port 21 b.

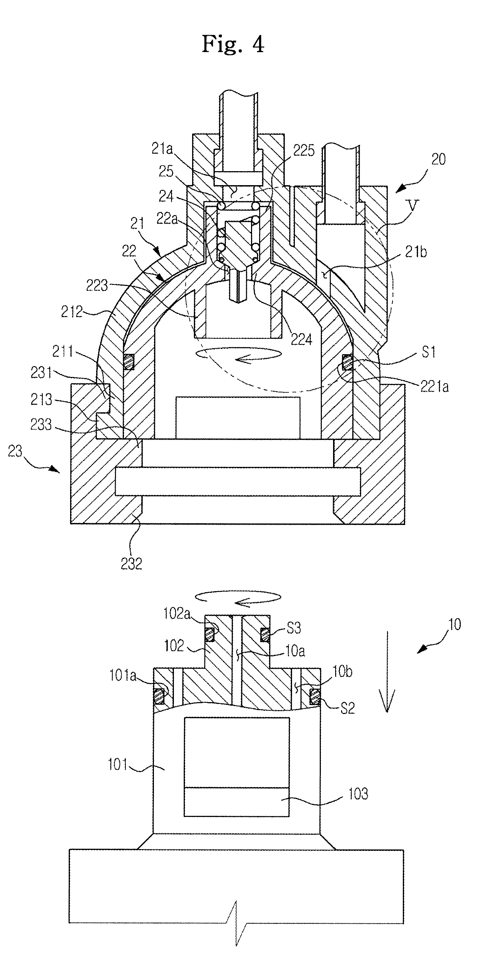

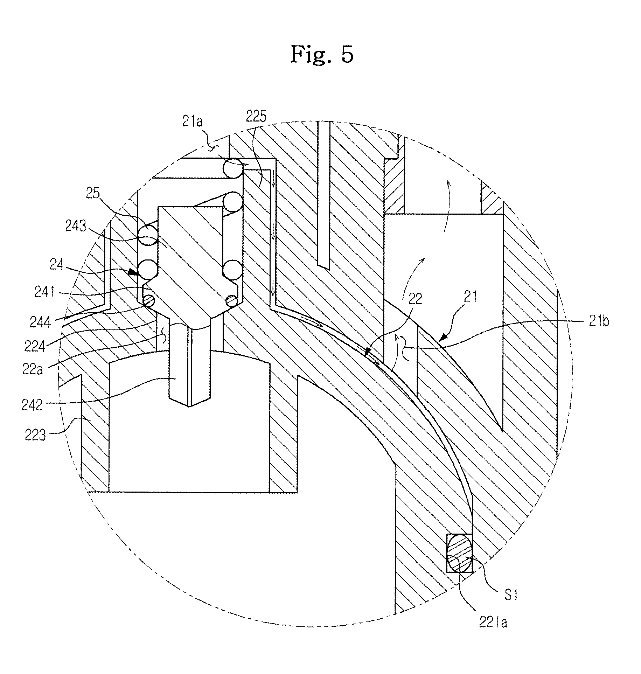

On the other hand, when the filter unit 10 is rotated in the reverse direction such that the filter unit 10 is separated from the connection unit 20, as shown in FIGS. 4 and 5, the opening and closing valve 24 may be returned to its original position by the elastic restoring force of the elastic member 25, whereby the opening and closing valve 24 is moved downward. As a result, the first communication hole 22a may be closed, and therefore, the communication between the introduction port 21 a and the inlet port 10a may be interrupted by the first communication hole 22a. The internal case 22 may rotate together with the filter unit 10 in the reverse direction, whereby the second communication hole 22b may be moved away from the discharge port 21 b. As a result, the communication between the outlet ports 10b and the discharge port 21 b may be interrupted by the internal case 22. Consequently, water does not flow. At this time, the fourth annular sealing member S4 may be brought into tight contact with the inner surface of the internal case 22 away from the discharge port 21 b. Consequently, water discharged through the outlet ports 10b is typically not transmitted to the discharge port 21 b; however, water introduced into the gap between the external case 21 and the internal case 22 may be transmitted to the discharge port 21 b.

As apparent from the above description, the water purifying device according to one or more embodiments of the present invention may include an opening and closing valve to open and close a first communication hole formed in an internal case when a filter unit is coupled to a connection unit. The first communication hole may be opened and closed by the opening and closing valve. As a result, it is possible to omit a sealing member sealing a region adjacent to the first communication hole, whereby the rotation of the filter unit is more easily accomplished. Consequently, the process for coupling the filter unit to the connection unit or separating the filter unit from the connection unit is more conveniently accomplished.

Although a few embodiments have been shown and described, it would be appreciated by those skilled in the art that changes may be made in these embodiments without departing from the principles and spirit of the invention, the scope of which is defined in the claims and their equivalents.

## Claims

1. A water purifying device having a filter unit to filter out impurities from water passing therethrough and a connection unit connected to the filter unit to transmit water from outside to the filter unit and to transmit the water purified by the filter unit to the outside, the connection unit comprising:
an external case having an introduction port through which water is introduced from the outside and a discharge port through which purified water is discharged to the outside;
an internal case rotatably mounted in the external case, the internal case having a first communication hole selectively communicating with the introduction port and a second communication hole selectively communicating with the discharge port; and
an opening and closing valve to selectively open and close the first communication hole depending upon whether the filter unit is coupled or not coupled to the connection unit.

2. The water purifying device according to claim 1,
wherein the introduction port is formed on a central axis of the external case, and the discharge port is formed eccentrically with respect to the introduction port, and
wherein the first communication hole is formed on the central axis of the internal case such that the first communication hole corresponds to the introduction port, and the second communication hole is formed eccentrically with respect to the first communication hole such that the second communication hole corresponds to the discharge port, whereby the second communication hole and the discharge port selectively communicate with each other depending upon the rotation angle of the internal case.

3. The water purifying device according to claim 1, wherein the opening and closing valve comprises:
a valve part elastically supported in the first communication hole by an elastic member to open and close the first communication hole;
an elastically supporting part having a diameter less than that of the valve part such that the elastic member is mounted on the elastically supporting part; and
a compression part extending through the first communication hole such that the compression part protrudes into the internal case, the compression part being compressed by the filter unit fitted in the internal case.

4. The water purifying device according to claim 3, wherein the valve part is provided at an outer circumference thereof with a valve sealing member formed in an annular shape to accomplish stable closing of the first communication hole.

5. The water purifying device according to claim 3, wherein the connection unit further includes a seat disposed in the first communication hole, the seat having a gradually decreasing diameter such that the seat is opened and closed by the valve part.

6. The water purifying device according to claim 3, wherein the compression part is formed in a section shape of a cross such that water passes through the compression part.

7. The water purifying device according to claim 1, wherein
the external case includes an external installation part formed in a shape of a cylinder opened at opposite sides thereof and an external cover formed in a shape of a hemisphere to close one side of the external installation part,
the internal case includes an internal installation part formed in a shape of a cylinder opened at opposite sides thereof and mounted in the external installation part and an internal cover formed in a shape of a hemisphere to close one side of the internal installation part, the internal cover being disposed inside the external cover, and
the connection unit further includes a first sealing member disposed between the external installation part and the internal installation part to prevent leakage of water through a gap defined between the external installation part and the internal installation part, the first sealing member being formed in an annular shape.

8. The water purifying device according to claim 1, wherein
the filter unit includes a connection part disposed at a top thereof such that the connection part is mounted in the internal case, the connection part having an inlet port and outlet ports, and
the connection unit further includes a second sealing member disposed between an inner surface of the internal case and an outer surface of the connection part to prevent leakage of water through a gap defined between an inner surface of the internal case and the outer surface of the connection part.

9. The water purifying device according to claim 8,
wherein the filter unit further includes a first connection pipe which protrudes from the connection part and in which the inlet port is formed, and the internal case is provided with a second connection pipe which extends inward such that the first connection pipe is fitted in the second connection pipe, and
wherein the connection unit further includes a third sealing member disposed between the outer surface of the first connection pipe and the inner surface of the second connection pipe to prevent leakage of water through a gap defined between the outer surface of the first connection pipe and the inner surface of the second connection pipe.

10. The water purifying device according to claim 2, wherein the connection unit further includes a fourth sealing member formed around the second communication hole of the internal case in an annular shape to partition a space defined between the inner surface of the external case and the outer surface of the internal case from the second communication hole.

11. The water purifying device according to claim 1, wherein the connection unit further includes a connection member formed in the shape of a cylinder opened at opposite sides thereof such that the external case and the internal case are coupled to one side of the connection member, and the filter unit is detachably coupled to the other side of the connection member.

12. The water purifying device according to claim 11, wherein the connection member is provided at the inner circumference thereof with a plurality of first catching jaws to catch the external case, the first catching jaws being spaced apart from each other in the circumferential direction, and the external case is provided at the outer circumference thereof with a plurality of first protrusions which are caught by the first catching jaws after the first protrusions are inserted through spaces defined between the first catching jaws, the first protrusions being spaced apart from each other in the circumferential direction.

13. The water purifying device according to claim 12, wherein the connection member is provided at the inner circumference thereof with a plurality of second catching jaws to catch the filter unit, the first catching jaws being spaced apart from each other in the circumferential direction, and the filter unit is provided at the outer circumference thereof with a plurality of second protrusions which are caught by the second catching jaws after the second protrusions are inserted through spaces defined between the second catching jaws, the second protrusions being spaced apart from each other in the circumferential direction.

14. A water purifying device having a filter unit to filter out impurities from water passing therethrough and a connection unit connected to the filter unit to transmit water from outside to the filter unit and to transmit the water purified by the filter unit to the outside, the connection unit comprising:
an external case having an introduction port disposed on a central axis thereof to allow water to be introduced from the outside therethrough and a discharge port disposed eccentrically with respect to the introduction port to allow water to be discharged to the outside;
an internal case rotatably mounted in the external case, the internal case having a first communication hole disposed on the central axis thereof to selectively communicate with the introduction port and a second communication hole disposed eccentrically with respect to the first communication hole to selectively communicate with the discharge port depending upon the rotation angle thereof; and
an opening and closing valve to selectively open and close the first communication hole depending upon whether the filter unit is coupled or not coupled to the connection unit.

15. The water purifying device according to claim 14, wherein the opening and closing valve includes a valve part elastically supported in the first communication hole by an elastic member to open and close the first communication hole, an elastically supporting part having a diameter less than that of the valve part such that the elastic member is mounted on the elastically supporting part, and a compression part extending through the first communication hole such that the compression part protrudes into the internal case, the compression part being compressed by the filter unit fitted in the internal case.

16. The water purifying device according to claim 15, wherein the compression part is formed in a section shape of a cross such that water passes through the compression part.

17. The water purifying device according to claim 15, wherein the connection unit further includes a fourth sealing member formed around the second communication hole of the internal case in an annular shape to partition a space defined between the inner surface of the external case and the outer surface of the internal case from the second communication hole.
